# EUROPÄISCHE PATENTANMELDUNG

(11) **EP 1 117 263 A2**
(43) Veröffentlichungstag der Anmeldung: **18.07.2001**
(21) Anmeldenummer: 00440322.6
(22) Anmeldetag: 11.12.2000
(51) Int. Cl.: H04Q 3/00, H04M 7/00, H04M 3/42

(54) **Persönlicher netzwerkübergreifender Rufnummerndienst**

(30) Priorität: 12.01.2000 DE 10000809
(71) Anmelder: ALCATEL, 75008 Paris (FR)
(72) Erfinder: Lautenschlager, Wolfgang, 71287 Weissach, Flacht (DE); Stahl, Uwe, 71229 Leonberg (DE)
(74) Vertreter: Zinsinger, Norbert, Dipl.-Ing.

(57) **Zusammenfassung**

Die Erfindung betrifft ein Verfahren zur Steuerung des Aufbaus einer Kommunikationsverbindung von einem rufenden Teilnehmer (B) zu einem gerufenen Teilnehmer (A) durch ein Fernsprechnetz (VNET) sowie eine Diensteinheit (SU) und ein Computerprodukt (CP) hierfür. Während des Verbindungsaufbaus wird eine Diensteinheit (SU) des Fernsprechnetzes (VNET) für die Kommunikationsverbindung getriggert. Die getriggerte Diensteinheit (SU) ermittelt sodann den der Kommunikationsverbindung zugeordneten gerufenen Teilnehmer (A) und greift auf ein persönliches Benutzerprofil des ermittelten Teilnehmers (A) zu, das neben ein oder mehreren Endgeräten (TE1 bis TE3) des Fernsprechnetzes (VNET) auch ein oder mehrere Endgeräte (TE4 und TE5) eines IP-Netzes (IPNET1, IPNET2) als diesem Teilnehmer zugeordnete Endgeräte spezifiziert. Die getriggerte Diensteinheit (SU) ermittelt Status Informationen über in diesem persönlichen Benutzer-Profil des ermittelten Teilnehmers spezifizierten IP-Endgeräte. Sie steuert sodann den weiteren Aufbau der Kommunikationsverbindung durch das Fernsprechnetz in Abhängigkeit von diesem persönlichen Benutzer Profil des ermittelten Teilnehmers (A) und den ermittelten Status-Informationen.

## Beschreibung

Die Erfindung betrifft ein Verfahren zur Steuerung des Aufbaus einer Kommunikationsverbindung von einem rufenden Teilnehmer zu einem gerufenen Teilnehmer durch ein Fernsprechnetz, sowie eine Diensteinheit und ein Computerprodukt zur Unterstützung des Aufbaus von Kommunikationsverbindungen zwischen rufenden Teilnehmern und gerufenen Teilnehmern durch ein Fernsprechnetz.

Die Erfindung geht von IN Diensten (IN = Intelligent Network) aus, wie sie beispielsweise in dem Artikel "Intelligente Netze: Den Diensten gewidmet" aus der Zeitschrift Elektrisches Nachrichtenwesen, Band 65, Nummer 1, Seiten 38 bis 43 beschrieben sind.

Eine Dienststeuereinheit stellt einem Teilnehmer eines Fernsprechnetzes einen Dienst "persönliche Rufnummer" bereit, mittels der der Teilnehmer innerhalb des Fernsprechnetzes eine Art Rufumleitung initiieren kann: Der Teilnehmer informiert den Dienst über die Rufnummer desjenigen Fernsprechendgerätes des Fernsprechnetzes, unter der er augenblicklich erreichbar ist. Diese Rufnummer stellt seine persönliche Rufnummer dar. Dem Dienst ist innerhalb des Fernsprechnetzes eine bestimmte Dienstkennung zugeordnet. Will nun ein Teilnehmer des Fernsprechnetzes eine Kommunikationsverbindung zu diesem Teilnehmer aufbauen, so wählt er die Dienstkennung dieses Dienstes. Der Ruf mit der Dienstkennung als gerufener Rufnummer wird von einer der Dienstvermittlungsstellen des Fernsprechnetzes erkannt, die daraufhin den von der Dienststeuereinheit bereitgestellten Dienst für diese Verbindung triggert. Die Dienststeuereinheit wertet sodann die gerufene Rufnummer in der Verbindungsanforderung auf die gespeicherte persönliche Rufnummer des Teilnehmers um und leitet damit den Ruf auf das durch die persönliche Rufnummer adressierte Endgerät um.

Der Erfindung liegt nun die Aufgabe zugrunde, Teilnehmern innerhalb eines Fernsprechnetzes einen komfortableren persönlichen Kommunikationsdienst zur Verfügung zu stellen.

Diese Aufgabe wird gelöst durch ein Verfahren zur Steuerung des Aufbaus einer Kommunikationsverbindung von einem rufenden Teilnehmer zu einem gerufenen Teilnehmer durch ein Fernsprechnetz nach der Lehre von Anspruch 1 sowie durch eine Diensteinheit und ein Computerprodukt zur Unterstützung des Aufbaus von Kommunikationsverbindungen zwischen rufenden Teilnehmern und gerufenen Teilnehmern durch ein Fernsprechnetz nach der Lehre von Anspruch 6 bzw. nach der Lehre von Anspruch 9.

Der Erfindung liegt hierbei der Gedanke zugrunde, daß von dem Dienst neben Endgeräten des Fernsprechnetzes zusätzlich den Teilnehmern zugeordnete Endgeräte eines vollkommen andersartigen Kommunikationsnetzes, nämlich IP-Endgeräte (IP = Internet Protokoll), in Betracht gezogen werden. Der Dienst kommuniziert weiter zusätzlich mit Komponenten des IP-Netzes, mit dem diese IP-Endgeräte verbunden sind, und ermittelt so Informationen über den Status dieser IP-Endgeräte. Der weitere Aufbau einer Kommunikationsverbindungen durch das Fernsprechnetz erfolgt sodann in Abhängigkeit von diesen ermittelten Status Informationen über IP-Endgeräte.

Der Vorteil der Erfindung besteht darin, daß sich die Anzahl der von dem Dienst alternativ adressierbaren Endgeräte und damit die Erreichbarkeit von Teilnehmern erhöht. Weiter wird Raum für eine Vielzahl neuartiger Dienste eröffnet, die es erlauben, den Verbindungsaufbau noch mehr an die Bedürfnisse von Teilnehmern anzupassen.

Vorteilhafte Ausgestaltungen der Erfindung sind den Unteransprüchen zu entnehmen.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild einer Kommunikationsumgebung mit mehreren Kommunikationsnetzen und mit einer erfindungsgemäßen Diensteinheit.
- Fig. 2: zeigt eine funktionelle Darstellung der Diensteinheit nach Fig. 1.

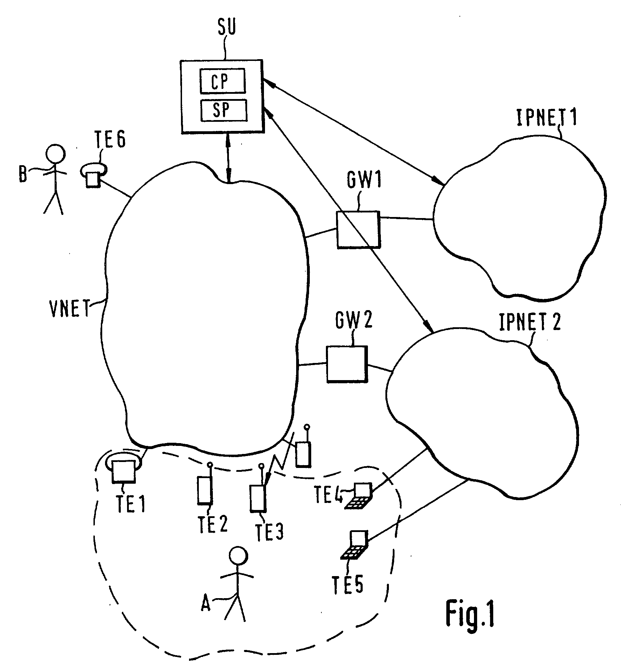

Fig. 1 zeigt drei Kommunikationsnetze VNET, IPNET1 und IPNET2, zwei Netzübergangseinrichtungen GW1 und GW2, sechs Endgeräte TE1 bis TE6 und eine Diensteinheit SU.

Bei dem Kommunikationsnetz VNET handelt es sich um ein Fernsprechnetz, beispielsweise um ein ISDN-Netz (ISDN = Integrated Digital Network) oder um ein PSTN-Netz (PSTN = Public Switched Telephone Network). Es ist hierbei auch möglich, daß das Kommunikationsnetz VNET von mehreren Teilnetzen gebildet werden, die auch unterschiedlichen Netzbetreibern zugeordnet sein können. Weiter können solche Teilnetze auch Mobilfunknetze, beispielsweise nach dem GSM Standard (GSM = Global System for Mobile Communication) sein. Endgeräte können mit dem Kommunikationsnetzen VNET somit beispielsweise über einen analogen PSTN Anschluß, einen ISDN Anschluß oder eine Luftschnittstelle nach dem GSM oder DECT Standard (DECT = Digital European Cordless Telecommunication) verbunden sein.

Bei dem Kommunikationsnetzen IPNET1 und IPNET2 handelt es sich jeweils um ein IP-Netz (IP = Internet Protokoll). Diese Kommunikationsnetze werden jeweils von Datennetzen gebildet, die als Layer 3 Schicht ein IP Protokoll verwendet (IP = Internet Protokoll). Beispiele für solch ein IP Protokoll sind die IPv4 oder IPv6 Protokolle. Die Kommunikationsnetze IPNET1 und IPNET2 sind beispielsweise verschiedenen Netzbetreibern oder Netzzugangsbetreibern zugeordnet.

Bei den Endgeräten TE1, TE2, TE3 und TE6 handelt es sich um Fernsprechendgeräte. Das Endgerät TE6 ist ein ISDN Endgerät, das Endgerät TE1 ist ein analoges Fernsprechendgerät, das Endgerät TE2 ist ein Mobilfunk-Telefon nach dem GSM Standard und das Endgerät TE3 ist ein Mobilfunk-Telefon nach dem DECT Standard.

Bei den Endgeräten TE4 und TE5 handelt es sich jeweils um IP-Endgeräte (IP = Internet Protokoll), beispielsweise um internetfähige Telefone oder um einen Computer, der mit einer Schnittstellenkarte zur Kommunikation über das Kommunikationsnetz IPNET ausgestattet ist. Die Endgeräten TE1 und TE2 sind weiter vorzugsweise mit einer VOIP Software ausgestattet (VOIP = Voice over IP), die es dessen Benutzer ermöglicht, eine Fernsprechkommunikation über das Kommunikationsnetz IPNET1 zu führen.

Das Endgerät TE6 ist einem Teilnehmer B zugeordnet. Die Endgeräte TE1 bis TE5 sind einem Teilnehmer A zugeordnet

Die Anzahl der Netzübergangseinrichtungen GW1 und GW2 ist beispielhaft gewählt. Die Netzübergangseinrichtung GW1 verbindet das Kommunikationsnetz VNET mit dem Kommunikationsnetz IPNET1 und die Netzübergangseinrichtung GW2 verbindet das Kommunikationsnetz VNET mit dem Kommunikationsnetz IPNET2. Die Netzübergangseinheiten GW1 und GW2 stellen jeweils Netzübergangfunktionen für einen Netzübergang Fernsprechnetz - IP-Netz bereit. Weiter ist es vorteilhaft, daß die Netzübergangseinheiten GW1 und GW2 jeweils die Funktion von VOIP Gateways (VOIP = Voice over IP) erbringen. Bei solchen VOIP Gateways handelt es sich um Gateways, die den Aufbau einer Fernsprechverbindung durch IP-Netze ermöglichen. Sie führen mittels der Unterstützung eines Gatekeepers eine Adressübersetzung in eine IP Adresse, die Codierung/ Decodierung sowie die Paketierung/Depaketierung des Datenstroms für den Transport durch das IP-Netz, und weitere Funktionen wie Echo Cancellation durch. Weiter steuern sie den Verbindungsaufbau durch das IP-Netz. Solche VOIP Gateways können beispielsweise gemäß der ITU-T Empfehlung H.323 realisiert sein.

Die Diensteinheit SU wird von einem oder mehreren miteinander verbundenen Rechnern gebildet, auf denen eine beispielsweise aus einem Betriebssystem und einem Datenbanksystem bestehende Software-Plattform aufsetzt. Software-Plattform und Rechner bilden zusammen eine Rechnerplattform SP. In Verbindung mit einem Computerprodukt CP führt die Rechnerplattform SP die unten beschriebenen Funktionen der Diensteinheit SU aus.

Es ist natürlich auch möglich, daß die Diensteinheit SU von einer oder mehreren logischen Komponenten gebildet werden, die auf einer Rechnerplattform aufsetzen. Neben den logischen Komponenten, die die Diensteinheit SU bilden, können natürlich auch noch weitere logische Komponenten anderer Applikationen auf der Rechnerplattform aufsetzen.

Das Computerprodukt CP wird von einem Datenträger und von einem auf diesem Datenträger abgespeicherten Computerprogramm gebildet. Läuft dieses Computerprogramm auf der Rechnerplattform SP ab, dann werden die unten beschriebenen Funktionen der Diensteinheit SU ausgeführt. Das Computerprodukt CP kann alternativ aber auch allein von diesem Computerprogramm als solchem gebildet werden.

Der Teilnehmer B initiert mittels seines Endgerätes TE6 den Aufbau einer Kommunikationsverbindung zu dem Teilnehmer A durch das Kommunikationsnetz VNET. Während des Verbindungsaufbaus wird die Diensteinheit SU, die dem Kommunikationsnetz SU zugeordnet ist, für diese Kommunikationsverbindung getriggert. Die Diensteinheit SU ermittelt sodann den dieser Kommunikationsverbindung zugeordneten gerufenen Teilnehmer, also den Teilnehmer B. Dann greift die Diensteinheit SU auf das persönliches Benutzerprofil des ermittelten Teilnehmers A zu. In diesem persönlichen Benutzerprofil des Teilnehmers A sind die dem Teilnehmer A zugeordneten Endgeräte spezifiziert. In diesem Benutzerprofil sind somit die Endgeräte TE1 bis TE3 des Fernsprechnetzes VNET und die Endgeräte TE4 und TE5 des IP-Netzes IPNET2 als dem Teilnehmer B zugeordnete Endgeräte spezifiziert.

Dann ermittelt die Diensteinheit SU Status Informationen über in diesem persönlichen Benutzer-Profil des ermittelten Teilnehmers A spezifizierten IP-Endgeräte, beispielsweise Status Informationen über die beiden Endgeräte TE4 und TE5. Hierzu kommuniziert die Diensteinheit SU mit dem Kommunikationsnetz IPNET2, mit dem die Endgeräte TE4 und TE5 verbunden sind. Anschließend steuert die Dienststeuereinheit SU den weiteren Aufbau der Kommunikationsverbindung in Abhängigkeit von dem persönlichen Benutzer Profils des Teilnehmers A und den ermittelten Status-Informationen.

Die Diensteinheit SU kann hierbei von einer Dienststeuereinheit oder einem Teil einer Diensteuereinheit gemäß der IN Architektur gebildet werden, die Dienste innerhalb des Fernsprechnetzes VNET bereitstellt. Die Diensteinheit SU kann jedoch auch integraler Bestandteil einer Vermittlungsstelle des Kommunikationsnetzes VNET sein.

In dem Fall, daß die Diensteinheit SU auf einer IN Architektur basiert, kann der Verbindungsaufbau beispielsweise wie folgt erfolgen: Der Teilnehmer B adressiert den Teilnehmer A durch eine dem Teilnehmer A zugeordnete logische Rufnummer. Erkennt eine Dienstvermittlungsstelle des Fernsprechnetzes VNET bei dem Aufbau einer Kommunikationsverbindung eine solche logische Rufnummer, die die Ziel-Rufnummer der Kommunikationsverbindung spezifiziert, so sendet sie eine Dienstanforderungsnachricht an die Dienststeuereinheit, die den von der Diensteinheit SU bereitgestellten Dienst steuert. Aufgrund dieser Dienstanforderungsnachricht wird die Diensteinheit SU sodann für diese Kommunikationsverbindung getriggert. Die Diensteinheit SU steuert sodann den weiteren Aufbau der Kommunikationsverbindung, indem sie Steuerbefehle an die sie triggernde Dienstvermittlungsstelle oder an Dienstunterstützungssysteme (Intelligent Peripherals) sendet .

Es ist hierbei insbesonders vorteilhaft, die Diensteinheit SU als Teil einer Diensteinheit zu realisieren, die einen Rufnummernportabilitätsdienst (RNP) innerhalb des Fernsprechnetzes VNET bereitstellt. Eine solche RNP-Dienstheit muß bei jedem Verbindungsaufbau getriggert werden, um die exakte physikalische Zieladresse der Verbindung zu ermitteln. Wird als Zieladresse eine der Diensteinheit SU zugeordnete logische Rufnummer ermittelt, so kann von der RNP-Diensteinheit gleich die Diensteinheit SU für die Kommunikationsverbindung getriggert werden.

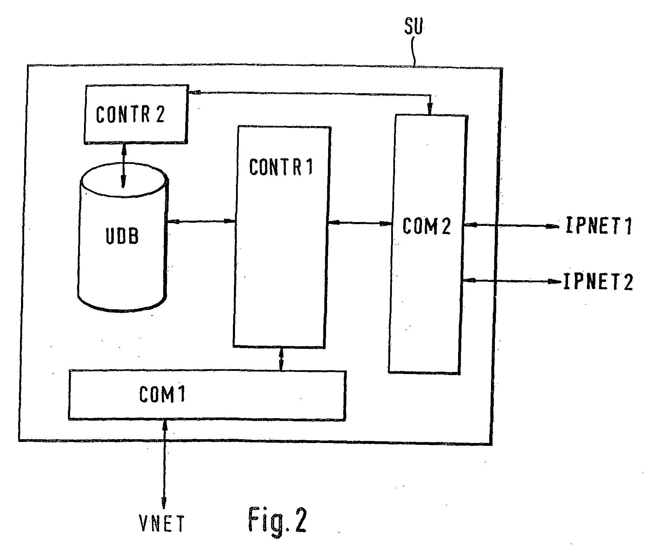

Im folgenden wird der detaillierte Aufbau der Diensteinheit SU und der Ablauf des erfindungsgemäßen Verfahrens anhand von Fig. 2 erläutert.

Fig. 2 zeigt die Diensteinheit SU und die Kommunikationsnetze VPNET, IPNET1 und IPNET2, mit denen die Diensteinheit SU kommuniziert. Aus funktioneller Sicht weist die Diensteinheit SU zwei Kommunikationseinheiten COM1 und COM2, zwei Steuereinheiten CONTR1 und CONTR2 und eine Speichereinheit UDB auf.

Die Kommunikationseinheit COM1 dient der Kommunikation mit Komponenten des Kommunikationsnetzes VNET. Solche Komponenten sind vorzugsweise Dienstvermittlungsstellen des Kommunikationsnetzes VNET. Sie stellt hierzu insbesondere Funktionen zur Bearbeitung der für diese Kommunikation notwendigen Protokollstack zur Verfügung.

Die Kommunikation erfolgt vorzugsweise über das Signalisierungssystem des Kommunikationsnetzes VNET. Die Kommunikationseinheit COM1 umfaßt somit Funktionen zur Bearbeitung des Protokollstacks des Nr. 7 Signalisierungssystems und des INAP-Protokolls (INAP = Intelligent Network Application Part).

Es ist jedoch auch möglich, daß das INAP-Protokoll über einen IP Protokollstack (IP = Internet Protocol) transportiert wird. Auch eine Kommunikation zwischen Komponenten des Kommunikationsnetzes VNET und der Diensteinheit SU, die über einen Software-Bus erfolgt, beispielsweise gemäß der CORBA Architektur (CORBA = Common Object Request Broker), und somit nicht des INAP Protokolls bedarf, ist möglich.

Die Kommunikationseinheit COM2 dient der Kommunikation mit Komponenten der Kommunikationsnetze IPNET1 und IPNET2. Solche Komponenten sind vorzugsweise Server oder Endgeräte dieser IP-Netze. Die Kommunikationseinheit COM2 stellt hierzu insbesondere Funktionen zur Bearbeitung der für den Empfang von Status-Informationen von Endgeräten dieser IP-Netze notwendigen Protokollstacks zur Verfügung: Als Layer 3 Protokoll wird für diese Kommunikation das IP Protokoll verwendet, als Layer 2 Protokoll beispielsweise ein ATM Protokoll (ATM = Asynchronous Transfer Mode) oder ein LAN Protokoll verwendet (LAN = Lokal Area Network).

Die Speichereinheit UDB dient dem Abspeichern von persönlichen Benutzer Profilen von Teilnehmern. Sie wird von einer Datenbank gebildet. Für jeden Teilnehmer, für den die Diensteinheit SU einen Dienst erbringt, ist in der Speichereinheit UDB ein solches persönliches Benutzerprofil abgespeichert. Jedes dieser Benutzerprofile spezifiziert hierbei ein oder mehrerer Endgeräte, die dem jeweiligen Teilnehmer zugeordnet sind. Es besteht hierbei die Möglichkeit, neben ein oder mehreren Endgeräte des Fernsprechnetzes auch ein oder mehrere Endgeräte eines IP-Netzes als dem jeweiligen Teilnehmer zugeordnete Endgeräte in der Speichereinheit zu spezifizieren. Zusätzlich zu diesen, dem jeweiligen Teilnehmer zugeordneten Endgeräten weist das Benutzerprofil noch weitere Parameter auf. Diese Parameter enthalten beispielsweise folgende Informationen: Sie geben eine Rangfolge der Endgeräte an, enthalten Anweisungen, was in Abhängigkeit von Status Informationen über Endgeräte zu tun ist, enthalten Sprachansagen, die an rufende Teilnehmer zu senden sind, enthalten weitere Informationen, die den Teilnehmer beschreiben oder enthalten Paßwörter für den Zugriff und die Veränderung des Benutzerprofils.

Eine mögliche Datenstruktur eines Benutzerprofils wird nun beispielhaft an der Datenstruktur des Benutzerprofils des Teilnehmers A verdeutlicht:

Die Datenstruktur enthält zum einen die logische Rufnummer des Teilnehmers A, mittels der dieser in einem Ruf adressiert wird. Das Benutzerprofil des Teilnehmers A wird mit dieser logischen Rufnummer innerhalb der Speichereinheit UDB adressiert. Weiter enthält sie die logischen und/oder physikalischen Adressen der Endgeräte TE1 bis TE5. Sie enthält somit beispielsweise die Fernsprechrufnummer der Endgeräte TE1 bis TE3, die diese Endgeräte innerhalb des Kommunikationsnetzes VNET adressiert und die IP Adressen der Endgeräte TE5 und TE6, die diese Endgeräte innerhalb des Kommunikationsnetzes IPNET1 adressiert. Zusätzlich enthält sie noch jeweils eine Kennung für das Kommunikationsnetz, mit dem das jeweilige Endgerät verbunden ist. Also für die Endgeräte TE1 bis TE3 eine Kennung für das Kommunikationsnetz VNET oder das jeweilige Teilnetz des Kommunikationsnetzes VNET, mit dem die Endgeräte TE1 bis TE3 jeweils verbunden sind. Für die Endgeräte TE4 und TE5 eine Kennung für das Kommunikationsnetz IPNET2. Das Benutzerprofil enthält weiter einen Satz von Parametern, die zum einen eine Prioritätsreihenfolge der Endgeräte TE1 bis TE5 definieren und zum anderen für jedes der Endgeräte angeben, wie bei welchen Statusinformationen über das jeweilige Endgerät zu verfahren ist.

Es ist weiter auch möglich, daß die Speichereinheit UDB integraler Teil einer Rufnummernportabilitätsdatenbank ist.

Die Steuereinheit CONTR1 wird beispielsweise durch den Empfang einer speziellen Dienstanforderungsnachricht über die Kommunikationseinheit COM1 während des Aufbaus einer Kommunikationsverbindung durch das Fernsprechnetz für diese Kommunikationsverbindung getriggert. Wenn die Steuereinheit CONTR1 für eine Kommunikationsverbindung getriggert wird, führt sie für diese Kommunikationsverbindung folgende Funktionen aus:

Zuerst ermittelt sie den dieser Kommunikationsverbindung zugeordneten gerufenen Teilnehmer. Hierzu empfängt sie beispielsweise über die Kommunikationseinheit COM1 die logische Rufnummer, an die die Kommunikationsverbindung adressiert ist und durchsucht mit dieser logischen Rufnummer die Speichereinheit UDB, um das Benutzerprofil des Teilnehmers und damit den Teilnehmer selbst zu ermitteln.

Dann greift die Steuereinheit auf das in der Speichereinheit USB abgespeicherte persönliche Benutzer-Profil des ermittelten Teilnehmers zu. Sie liest Parameter des Benutzerprofils und Adressen von Endgeräten aus, die in dem Benutzerprofil als dem ermittelten Teilnehmer zugeordnete Endgeräte spezifiziert sind.

Anschließend ermittelt die Steuereinheit CONTR1 mittels Zugriff auf die Kommunikationseinheit COM2 Status Informationen über in dem persönlichen Benutzer-Profil des ermittelten Teilnehmers spezifizierten IP-Endgeräte. Status-Informationen sind Informationen über den Zustand des IP-Endgerät, beispielsweise ob das IP-Endgerät augenblicklich mit dem IP-Netz verbunden ist oder nicht (online/offline), ob das IP-Endgerät augenblicklich mit anderen Endgeräten oder mit Servern des IP-Netzes kommuniziert, oder über wie viel frei Kommunikations- oder Verarbeitungsressourcen das IP-Endgeräte augenblicklich verfügt.

Diese Zustandsdaten frägt die Steuereinheit CONTR1 über die Kommunikationseinheit COM2 von diesen IP-Endgeräten oder von diesen IP-Endgeräten zugeordneten Servern des jeweiligen IP-Netzes ab. Hierzu wird von der Kommunikationseinheit eine Verbindung mit demjenigen IP-Netz aufgebaut, dem das jeweilige IP-Endgerät zugeordnet ist. Die Kommunikation findet somit während des Aufbaus der Fernsprechverbindung statt. Es ist jedoch auch möglich, daß die Endgeräte selbst oder ein Server des IP-Netzes diese Statusinformationen selbständig an die Diensteinheit SU senden. In diesem Fall würde die Kommunikation vorzugsweise zu Beginn der IP-Session des IP-Endgerätes oder bei einer Änderungen der Zustandsdaten erfolgen.

Die Steuereinheit CONTR1 steuert sodann den weiteren Aufbau der Kommunikationsverbindung in Abhängigkeit von dem persönlichen Benutzer Profils des ermittelten Teilnehmers und den ermittelten Status-Informationen. Je nach den Anweisungen in den Parameterdaten des Benutzer Profils und den ermittelten Status-Informationen leitet sie den weiteren Aufbau der Kommunikationsverbindung zu einem der in dem Benutzer Profil spezifizierten Endgeräte ein, bricht den Verbindungsaufbau ab oder veranlaßt das Senden eines Mitteilungstextes oder einer Sprachansage an den rufenden Teilnehmer.

Weiter ist es auch möglich, daß die Steuereinheit CONTR1 über die Kommunikationseinheit COM2 an ein in dem persönlichen Benutzer-Profil des ermittelten Teilnehmers spezifizierten IP-Endgerät eine Nachricht sendet, die einen ankommenden Ruf anzeigt. Das Senden dieser Nachricht kann hierbei in Abhängigkeit von den Anweisungen in den Parameterdaten des Benutzerprofils erfolgen.

Weiter ist es auch möglich, daß die Steuereinheit CONTR1 den weiteren Aufbau der Kommunikationsverbindung zusätzlich auch in Abhängigkeit von einer Nachricht steuert, die von einem in dem persönlichen Benutzer-Profil des ermittelten Teilnehmers spezifizierten IP-Endgerät über die Kommunikationseinheit COM2 and die Steuereinheit CONTR1 gesendet wird. Bei dieser Nachricht kann es sich vorzugsweise um eine Antwortnachricht auf eine von der Steuereinheit CONTR1 an dieses IP-Endgerät gesendete Nachricht handeln, die diesem einen ankommenden Ruf anzeigt.

Weiter ist es vorteilhaft, daß die Steuereinheit CONTR1 den Aufbau einer VOIP Kommunikationsverbindung zu einem in dem persönlichen Benutzer-Profil des ermittelten Teilnehmers spezifizierten IP-Endgerät steuert, wenn sie ermittelt, daß aufgrund der Parameterdaten und der Status Daten die Verbindung zu diesem IP-Endgerät aufzubauen ist. Daß eine VOIP Verbindung aufzubauen ist, kann auch als zusätzliche Anweisung in den Parameterdaten angegeben sein. Der Aufbau einer VOIP Verbindung erfolgt hierbei durch die Initiierung des Verbindungsaufbaus zu einem VOIP Gateway und durch Übermittlung der Adresse des IP-Endgerätes and dieses VOIP Gateway.

Die Steuereinheit CONTR2 dient dazu, Teilnehmer die Veränderung und das Auslesen ihrer persönlichen Benutzerprofile von den Kommunikationsnetzen IPNET1 und IPNET2 aus zu ermöglichen. Die Steuereinheit CONTR2 interagiert hierzu zum einen mit der Kommunikationseinheit COM2 und zum anderen mit der Speichereinheit UDB. Die Teilnehmer können so über ein IP-Endgerät auf diese Daten zugreifen. Es ist hierbei vorteilhaft, daß persönliche Benutzer-Profile nur von in dem persönlichen Benutzerprofil spezifizierten IP-Endgerät verändert werden können. Weiter ist eine Absicherung des Zugriffs durch Passworte vorteilhaft, die ihrerseits in dem persönlichen Benutzerprofil des Teilnehmers gespeichert werden.

## Patentansprüche

1. Verfahren zur Steuerung des Aufbaus einer Kommunikationsverbindung von einem rufenden Teilnehmer (B) zu einem gerufenen Teilnehmer (A) durch ein Fernsprechnetz (VNET), wobei bei dem Verfahren während des Verbindungsaufbaus eine Diensteinheit (SU) des Fernsprechnetzes (VNET) für die Kommunikationsverbindung getriggert wird und die getriggerte Diensteinheit (SU) sodann den der Kommunikationsverbindung zugeordneten gerufenen Teilnehmer (A) ermittelt, auf ein in einer Speichereinheit (UDB) abgespeichertes persönliche Benutzer-Profil des ermittelten Teilnehmers zugreift und in Abhängigkeit von dem persönlichen Benutzer Profil des ermittelten Teilnehmers den weiteren Aufbau der Kommunikationsverbindung steuert,
**dadurch gekennzeichnet**, daß die getriggerte Diensteinheit (SU) auf ein persönliches Benutzerprofil des ermittelten Teilnehmers (A) zugreift, das neben ein oder mehreren Endgeräten (TE1 bis TE3) des Fernsprechnetzes (VNET) auch ein oder mehrere Endgeräte (TE4 und TE5) eines IP-Netzes (IPNET1, IPNET2) als diesem Teilnehmer zugeordnete Endgeräte spezifiziert, daß die getriggerte Diensteinheit (SU) Status Informationen über in diesem persönlichen Benutzer-Profil des ermittelten Teilnehmers spezifizierten IP-Endgeräte ermittelt und daß die getriggerte Dienststeuereinheit (SU) den weiteren Aufbau der Kommunikationsverbindung durch das Fernsprechnetz in Abhängigkeit von diesem persönlichen Benutzer Profils des ermittelten Teilnehmers (A) und den ermittelten Status-Informationen steuert.

2. Verfahren nach Anspruch 1, dadurch gekennzeichnet, daß die getriggerte Diensteinheit (SU) an ein in dem persönlichen Benutzer-Profil des ermittelten Teilnehmers spezifizierten IP-Endgerät eine Nachricht sendet, die einen ankommenden Ruf anzeigt.

3. Verfahren nach Anspruch 1, dadurch gekennzeichnet, daß die getriggerte Diensteinheit (SU) den Aufbau der Kommunikationsverbindung weiter in Abhängigkeit von einer Nachricht von einem in dem persönlichen Benutzer-Profil des ermittelten Teilnehmers spezifizierten IP-Endgerät steuert.

4. Verfahren nach Anspruch 1, dadurch gekennzeichnet, daß die getriggerte Diensteinheit (SU) den Aufbau einer VOIP Kommunikationsverbindung zu einem in dem persönlichen Benutzer-Profil des ermittelten Teilnehmers spezifizierten IP-Endgerät steuert.

5. Verfahren nach Anspruch 1, dadurch gekennzeichnet, daß das persönlichen Benutzer-Profil von in dem persönlichen Benutzerprofil spezifizierten IP-Endgerät verändert wird.

6. Diensteinheit (SU) zur Unterstützung des Aufbaus von Kommunikationsverbindungen zwischen rufenden Teilnehmern (B) und gerufenen Teilnehmern (A) durch ein Fernsprechnetz (VNET), wobei die Diensteinheit (SU) mit einer Speichereinheit (UDB) zum Abspeichern von persönlichen Benutzer Profilen von Teilnehmern und mit einer Steuereinheit (CONTR1) versehen ist, die so ausgestaltet ist, daß sie, wenn sie während des Aufbaus einer Kommunikationsverbindung durch das Fernsprechnetz (VNET) für diese Kommunikationsverbindung getriggert wird, den dieser Kommunikationsverbindung zugeordneten gerufenen Teilnehmer (A) ermittelt, auf das in der Speichereinheit (UDB) abgespeicherte persönliche Benutzer-Profil des ermittelten Teilnehmers (A) zugreift und in Abhängigkeit von dem persönlichen Benutzer Profils des ermittelten Teilnehmers (A) den weiteren Aufbau der Kommunikationsverbindung steuert,
**dadurch gekennzeichnet**, daß die Diensteinheit (SU) weiter mit einer Kommunikationseinheit (COM2) zum Empfang von Status-informationen von Endgeräten eines IP-Netzes (IPNET1, IPNET2) versehen ist, daß in der Speichereinheit (UDB) neben ein oder mehreren Endgeräte (TE1 bis TE3) des Fernsprechnetzes (VNET) auch ein oder mehrere Endgeräte (TE4, TE5) eines IP-Netzes (IPNET1) als diesem Teilnehmer zugeordnete Endgeräte spezifiziert sind, und daß die Steuereinheit (CONTR1) weiter so ausgestaltet ist, daß sie Status Informationen über in dem persönlichen Benutzer-Profil des ermittelten Teilnehmers spezifizierten IP-Endgeräte (TE4, TE5) ermittelt und den weiteren Aufbau der Kommunikationsverbindung durch das Fernsprechnetz in Abhängigkeit von dem persönlichen Benutzer Profils des ermittelten Teilnehmers und den ermittelten Status-Informationen steuert.

7. Diensteinheit (SU) nach Anspruch 1, dadurch gekennzeichnet, daß die Diensteinheit von einer Dienststeuereinheit gemäß der IN Architektur gebildet wird, die Dienste innerhalb des Fernsprechnetzes (VNET) bereitstellt.

8. Diensteinheit nach Anspruch 1, dadurch gekennzeichnet, daß die Diensteinheit Teil einer Diensteinheit ist, die einen Rufnummernportabilitätsdienst in dem Fernsprechnetz bereitstellt.

9. Computerprodukt (CP) zur Unterstützung des Aufbaus von Kommunikationsverbindungen zwischen rufenden Teilnehmern (B) und gerufenen Teilnehmern (A) durch ein Fernsprechnetz (VNET),
**dadurch gekennzeichnet,** daß das Computerprodukt (CP) so ausgestaltet ist, daß es in Verbindung mit einer Rechnerplattform (SP) einer Diensteinheit (SU) das Verfahren nach Anspruch 1 ausführt.
